# FASCICULE DE BREVET EUROPEEN

(11) **EP 0 761 578 B1**
(45) Date de publication et mention de la délivrance du brevet: **21.05.2003**
(21) Numéro de dépôt: 96401873.3
(22) Date de dépôt: 02.09.1996
(51) Int. Cl.: B65G 61/00

(54) **Dispositif er procédé de palettisation**
Palettiervorrichtung und Palettierverfahren
Palletising device and method

(30) Priorité: 07.09.1995 FR 9510469
(43) Date de publication de la demande: 12.03.1997
(73) Titulaire: NEWTEC PALETTISATION, 85290 St-Laurent-sur-Sevre (FR)
(72) Inventeur: Guasco, Pierre François Michel, 91600 Savigny/Orge (FR)
(74) Mandataire: Hurwic, Aleksander

(56) Documents cités:
- DE-A- 2 062 845
- DE-A- 2 945 883
- GB-A- 2 000 739
- GB-A- 2 265 893
- TECHNISCHE RUNDSCHAU, vol. 86, no. 15, 15 Avril 1994, BERN CH, pages 20-21, XP000445699 FÖRDERTECHNIK AG.: "AUTOMATISCHE ROBOTERPALETTIERUNG"

## Description

La présente invention se rapporte à un dispositif d'empilage de couches sur une palette et à un dispositif de palettisation comportant un tel dispositif d'empilage de couches.

On connaît d'une part la réalisation flexible des palettes avec de très faibles cadences. Notamment, la palettisation manuelle permet de réaliser des palettes hétérogènes ou des palettes incomplètes. Toutefois, il en résulte un prix de revient élevé, des schémas de palettisation peu performants et par suite des palettes dont la stabilité ne peut pas toujours être garantie. On connaît d'autre part, des palettiseurs susceptibles de soutenir des cadences élevées bien adaptées à la réalisation de longues séries de palettes homogènes identiques.

Toutefois, l'industrie de grande distribution, notamment l'industrie agro-alimentaire tend à diversifier les unités de vente (U.V.) résultant de la diversification des produits et des conditionnements offerts à la clientèle. De plus, les distributeurs essayent de réduire au minimum leur stock et par suite de passer des commandes du nombre exact d'unités de vente désirées même si ce nombre ne correspond pas nécessairement à un nombre de palettes homogènes complètes.

L'article paru dans la revue "Technische Rundschau" le 15 Avril 1994 (vol. 86, n° 15) décrit un robot qui saisit des articles un par un avant de les déposer sur l'une de deux palettes en cours de constitution.

Le document DE-A-2062845 décrit un système dans lequel on prélève des couches de produits à partir de palettes homogènes de produits qui circulent sur un convoyeur d'alimentation le long duquel on trouve des stations de constitution de palettes hétérogènes de produits à partir d'un robot de constitution de couches.

Par conséquent, le but de la présente invention est d'offrir des moyens pour palettiser à cadence élevée une grande variétés de vente élémentaires regroupées de diverses manières sur diverses palettes.

C'est également un but de la présente invention d'offrir des moyens pour réaliser à cadence élevée des palettes hétérogènes, chacune portant divers types d'unités de vente élémentaires organisées ou non en couches homogènes.

C'est également un but de la présente invention d'offrir des moyens permettant de réaliser des palettes incomplètes.

C'est également un but de la présente invention d'offrir des moyens permettant de réaliser simultanément ou alternativement des palettes correspondant à une pluralité de schémas de palettisation.

C'est aussi un but de la présente invention d'offrir des moyens de palettisation présentant un faible encombrement au sol.

C'est également un but de la présente invention de ne pratiquement pas perdre de temps de production aux changements lors de la réalisation alternative de palettes constituées d'unités de vente de natures différentes.

C'est également un but de la présente invention d'offrir des moyens de palettisation dont la cadence est susceptible de s'adapter à la cadence de sortie d'une chaîne de production et/ou de conditionnement.

Ces buts sont atteints selon l'invention par la mise en oeuvre d'un dispositif flexible et reconfigurable en un temps réel de constitution de couches et/ou d'un dispositif flexible et/ou reconfigurable en temps réel d'empilement des couches sur une ou sur plusieurs palettes en cours de constitution. Le dispositif flexible de formation des couches comporte par exemple un robot programmable à bras mobile muni des moyens de préhension de lots, d'un convoyeur d'amenée en continu d'unités de vente et d'un convoyeur de grande largeur d'évacuation des couches vers des moyens d'empilement de couches.

Le dispositif d'empilement de couches selon l'invention comporte par exemple, des conformateurs de couche, un robot cartésien trois axes X, Y, Z muni de moyens de préhension de couches complètes et de dépôt sur la couche précédente d'une palette en cours de constitution.

La mise en oeuvre d'un dispositif flexible permet, si cela est désiré, de communiquer des connaissances pertinentes sur la constitution des couches ou sur l'empilement des couches sur des palettes aux divers robots du dispositif selon la présente invention. On communique, par exemple, aux robots de constitution de couches les informations concernant les caractéristiques géométriques de lots, l'identification des lots élémentaires correspondant aux diverses couches à constituer, l'éventuelle fragilité de certaines unités de vente, le schéma de palettisation à adopter, le ou les outil(s) de préhension de lots à utiliser, l'orientation des unités de vente arrivant sur un convoyeur, etc...

Le robot d'empilement des couches reçoit des connaissances sur les diverses couches à empiler, les diverses palettes homogènes ou hétérogènes à constituer les caractéristiques géométriques des diverses couches, le ou les outil(s) de préhension des couches à mettre en oeuvre, la nécessité éventuelle de dépôts d'intercalaires entre les couches successives des palettes en cours de constitution, la fragilité des couches, les emplacements auxquels les palettes doivent être constituées, etc...

Les chariots de transfert automatique de palettes en cours de constitution et/ou des charges palettisées reçoivent la connaissance sur l'emplacement de la palette à évacuer, l'emplacement de dépose de la palette, le trajet optimal à suivre entre l'emplacement de prise de la palette en cours de constitution ou de la charge palettisée et l'emplacement de dépose de la palette en cours de constitution ou de la charge palettisée, le type de palettes à manutentionner, la fragilité éventuelle de la palette en cours de constitution ou de la charge palettisée à transférer, etc...

Ces connaissances sont téléchargées vers les automates programmables en une seule fois, ou avantageusement, au fur et à mesure qu'elles deviennent pertinentes à partir d'un système informatique de planification de production et/ou de gestion de flux. En variante, un ordinateur central disposant desdites connaissances assure directement les commandes des divers dispositifs selon l'invention.

L'invention a principalement pour objet un dispositif de palettisation d'unités de vente élémentaires sur au moins une palette, ce dispositif comprenant :
- au moins un premier robot pour constituer au moins une couche homogène ou hétérogène d'unités de vente élémentaires, qui sont transportées par au moins un convoyeur d'amenée, ledit premier robot comportant un bras mobile muni de moyens préhenseurs pour prélever sur le convoyeur d'amenée des lots d'une ou plusieurs unités de vente qui lui sont nécessaires pour former la couche demandée, et les déposer sur un convoyeur de réception en formant une couche homogène ou hétérogène, et
- au moins un second robot comportant :
   - des moyens de saisie d'une couche homogène ou hétérogène ainsi constituée sur le convoyeur de réception,
   - des moyens d'entraînement et de guidage des moyens de saisie pour diriger la couche saisie vers au moins deux emplacements de réception de palettes en cours de constitution, pour la déposer à l'un desdits emplacements, selon l'ordre reçu de moyens de commande, sur une couche précédente d'une palette en cours de constitution ou pour former la première couche d'une palette, et
   - des moyens pour évacuer temporairement une palette en cours de constitution ou pour évacuer une palette une fois constituée.

L'invention a également pour objet un dispositif, caractérisé en ce que le robot de constitution de couches comporte un bras mobile et en ce que lesdits dispositifs comportent au moins un convoyeur d'amenée des fardeaux au robot de constitution de couches.

L'invention a également pour objet un dispositif, caractérisé en ce qu'il comporte deux robots de constitution de couches disposés symétriquement de part et d'autre du dispositif d'amenée de couches à empiler au robot d'empilement de couches.

L'invention a également pour objet un dispositif, caractérisé en ce que le ou les robots de constitution de couches comportent des moyens de changement automatique d'outils de saisie des lots.

L'invention a également pour objet un dispositif de palettisation à cadence élevée, caractérisé en ce qu'il comporte une pluralité de dispositifs de palettisation selon l'invention disposés en parallèle ainsi que des moyens d'alimentation en unités de vente, sur commande, d'au moins deux desdits dispositifs de palettisation.

L'invention a également pour objet un procédé de palettisation, caractérisé en ce qu'il met en oeuvre un dispositif selon l'invention.

L'invention a également pour objet un procédé de réalisation de palettes hétérogènes comportant une pluralité de types de couches empilées, caractérisé en ce qu'il comporte les étapes consistant à :
a) former des couches homogènes ou hétérogènes d'unités de vente élémentaires au moyen d'au moins un premier dispositif de constitution de couches, et charger dans un système informatique, le schéma de l'empilement des couches d'une palette hétérogène;
b) déposer la ou les premières couches de la palette à l'aide de seconds dispositifs d'empilement de couches ;
c) évacuer par un chariot automatique commandé par ledit système informatique, la palette en cours de constitution du dispositif d'empilement des couches, dans l'attente de la disponibilité dans un autre dispositif d'empilement des couches, d'un autre type de couches devant être empilées sur la palette hétérogène ;
d) amener la palette en cours de constitution au dispositif d'empilement de couches disposant des couches devant être empilées sur la palette hétérogène en cours de constitution ;
e) répéter les étapes c) et d) jusqu'à la constitution complète de la palette hétérogène ;
f) évacuer la palette hétérogène complète du dispositif d'empilement des couches.

L'invention a également pour objet un procédé, caractérisé en ce que lors de l'étape c), la palette en cours de constitution est évacuée vers une zone de stockage dynamique et en ce que, lors de l'étape d), la palette en cours de constitution est reprise dans la zone de stockage dynamique pour être amenée au dispositif d'empilement de couches.

L'invention sera mieux comprise au moyen de la description ci-après et des figures annexées données comme des exemples non limitatifs et sur lesquelles :
- la figure 1 est une vue en plan de l'exemple préféré de réalisation d'un dispositif de constitution de couches selon la présente invention ;
- la figure 2 illustre un exemple de couches formées par le dispositif de la figure 1 ;
- la figure 3 est un organigramme d'une campagne de formation de couches ;
- la figure 4 est une vue en perspective de l'exemple préféré de réalisation d'un dispositif d'empilement de couches selon la présente invention ;
- la figure 5 est une vue en plan d'un dispositif préhenseur de couches du dispositif d'empilement de couches de la figure 4 ;
- la figure 6 est une vue en coupe verticale selon VI-VI du dispositif de la figure 5 ;
- la figure 7 est un organigramme expliquant la dépose de couches selon l'invention ;
- la figure 8 est une vue schématique en plan d'un exemple de réalisation d'un dispositif de palettisation selon la présente invention ;
- la figure 9 est un organigramme expliquant le fonctionnement du dispositif de palettisation selon la présente invention ;
- la figure 10 est une vue en plan d'une batterie de dispositifs de palettisation de la figure 8 disposés à la sortie d'une chaîne de production ;
- la figure 11 est une vue en plan d'un atelier de palettisation flexible selon la présente invention.

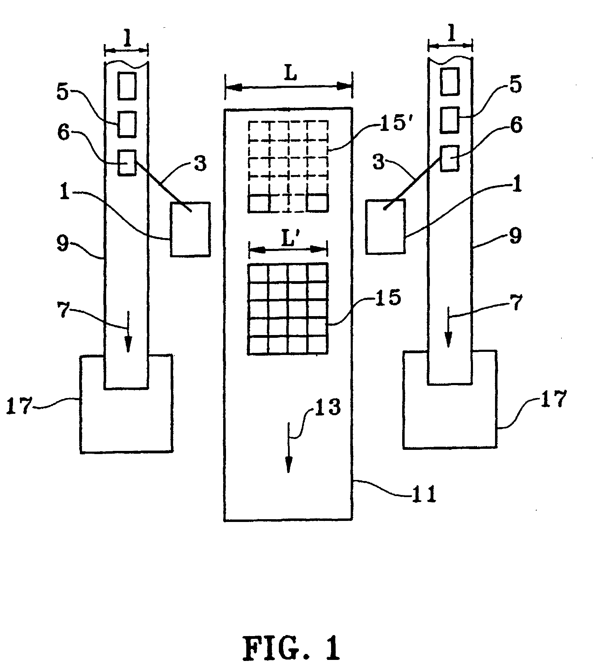

Sur les figures 1 à 11, on a utilisé les mêmes références pour désigner les mêmes éléments.

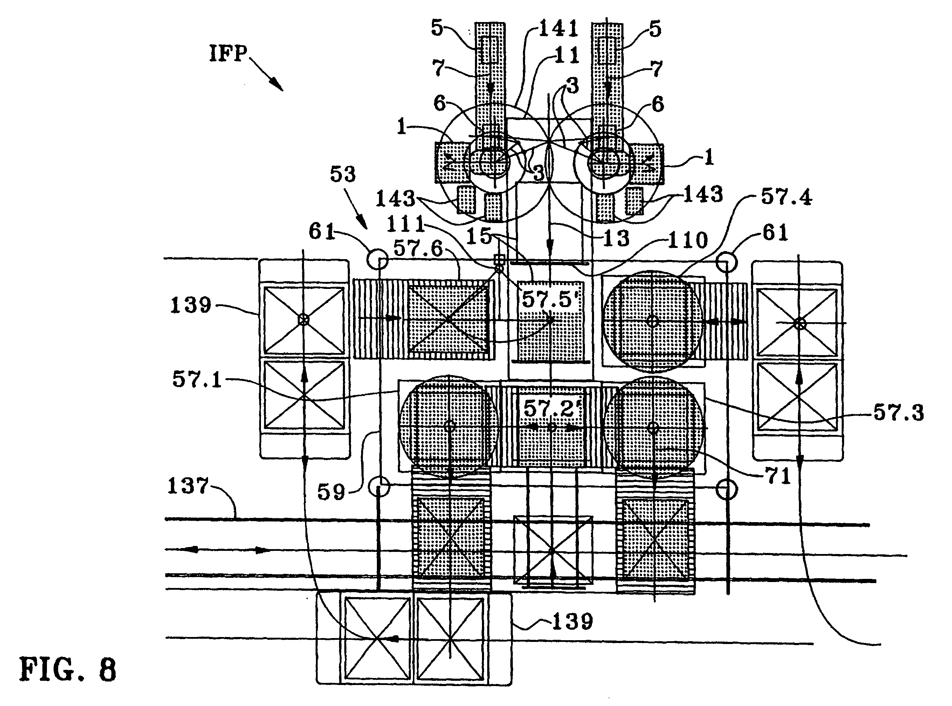

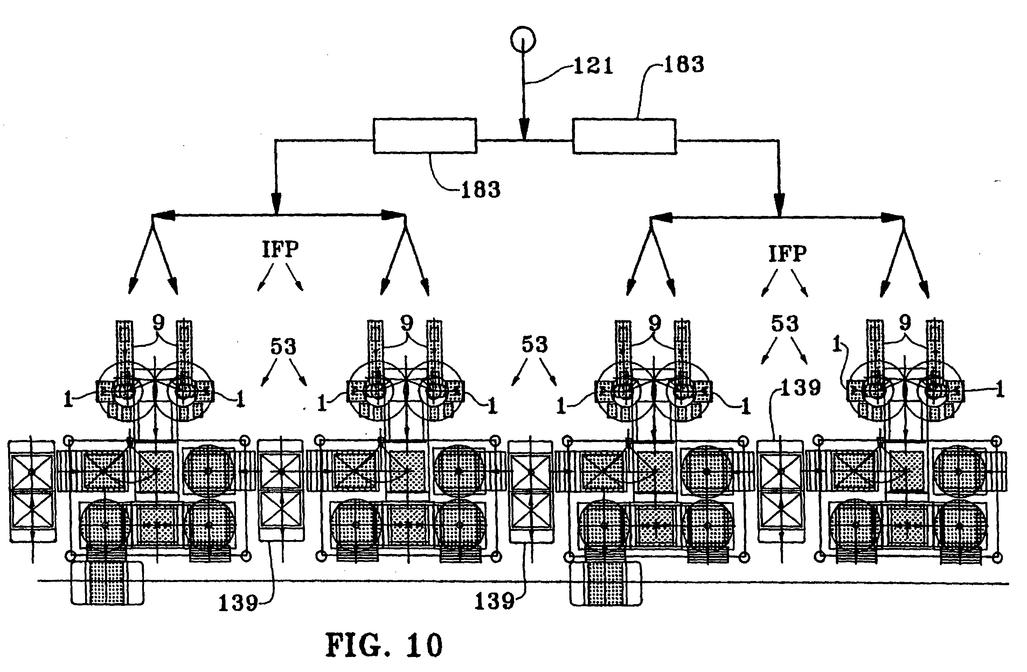

Sur la figure 1, on peut voir un dispositif de constitution de couches selon la présente invention comportant au moins un, avantageusement deux robots 1, chacun comportant un bras mobile 3 muni de moyens préhenseurs des unités de vente élémentaires 5 formant les lots 6 à palettiser, défilant selon la flèche 7 sur un convoyeur 9 de préférence un convoyeur à faible poussée. La largeur du convoyeur 9 est suffisante pour permettre le transport de toutes les unités de vente élémentaires 5 susceptibles d'être palettisées à l'aide du dispositif selon la présente invention. Un convoyeur 11 de réception et de constitution de couches défilant selon la flèche 13 présente une largeur L supérieure à la largeur du convoyeur 9 sensiblement égale et de préférence légèrement supérieure à la largeur L' des plus grandes palettes 15 susceptibles d'être constituées par le dispositif selon la présente invention. Dans l'exemple illustré, le dispositif comporte disposé, en vis-à-vis, de chaque côté du convoyeur 11 de réception de couches 15 un robot 1 associé à un convoyeur 9 d'amenée des unités de vente élémentaires 5. Un tel cas, le robot gauche constitue la moitié gauche de chaque couche alors que le robot droit constitue la moitié droite de chaque couche. Ainsi, non seulement on double la cadence de constitution de couches par rapport à l'emploi d'un robot unique mais, on peut mettre en oeuvre deux robots 1 munis de bras 3 dont la portée est inférieure à la largeur L du convoyeur 11. Il est bien entendu que la mise en oeuvre d'un robot unique ou la mise en oeuvre d'une pluralité de robots disposés d'un côté ou, avantageusement des deux côtés du convoyeur 11 de réception de couches ne sort pas du cadre de la présente invention. Avantageusement, on utilise des robots 1 à bras mobiles à 4 degrés de liberté, comme par exemple le robot A520i du constructeur FANUC. Toutefois, la mise en oeuvre d'autres types de robots comme par exemple des robots montés sur portique ne sort pas du cadre de la présente invention. Dans l'exemple de réalisation illustré sur la figure 1, chaque robot 1 est disposé entre le convoyeur 11 de réception de couches 15 et un convoyeur 9 d'amenée d'unités de vente. Avantageusement, l'extrémité de chaque convoyeur 9 amène d'éventuelles unités de vente élémentaires 5 non enlevées par les robots 1 dans un magasin de réception 17 destiné notamment à stocker des éventuelles unités de vente élémentaires non conformes, comme par exemple les unités de vente abîmées, notamment disloquées, ou mal positionnées. En variante, illustrés sur les figures 8 et 10, les convoyeurs 9 et 11 sont juxtaposés, les robots 1 étant disposés à l'extrémité du convoyeur 9 ce qui permet de réduire la course du bras 3 pour déposer les lots d'unités de vente sur le tapis 11 de réception et de constitution de couches. Il est à noter que le dispositif selon l'invention permet de constituer non seulement des couches homogènes mais également des couches hétérogènes comportant divers types d'unités de vente 5 ayant de préférence la même hauteur.

Dans une variante non illustrée, les convoyeurs 9 sont des convoyeurs en circuit fermé alimentés en divers types d'unités de vente 5, en continu et/ou à la demande, par exemple à partir d'une chaîne d'emballage ou de production. Chaque convoyeur 9 peut desservir un ou plusieurs robots 1. Chaque robot 1 identifie les unités de vente 5 passant sur le convoyeur 9 et prélève les lots 6 qui lui sont nécessaires pour former la couche 15 demandée.

Dans une première variante de réalisation, le tapis de réception et de constitution de couches 11 est immobile pendant la phase de constitution d'une couche par les robots 1.

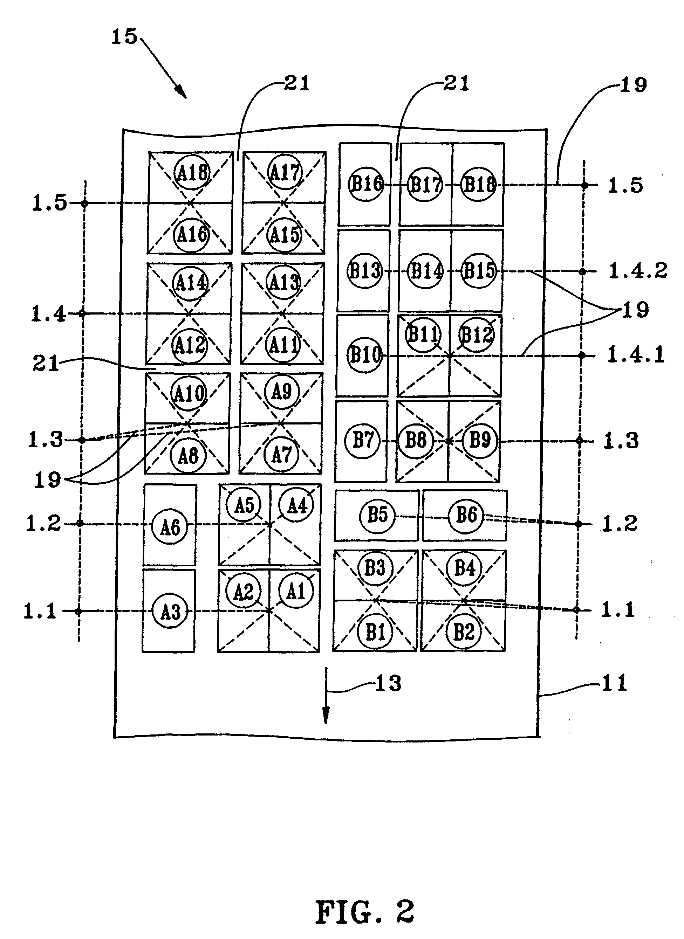

Dans une variante avantageuse, le tapis 11 de réception et de constitution de couches défile, avantageusement à vitesse constante. Les coordonnées des dépôts des divers lots constituant chaque couche tiennent compte du déplacement du convoyeur 11. La position sur le convoyeur 11 d'un lot à déposer est calculée par le robot 1 à partir de la position du lot dans la couche et de la position de la couche sur le convoyeur 11 au moment du dépôt. Avantageusement, des moyens d'acquisition, notamment des cellules photo-électriques, des détecteurs à ultra-sons ou un dispositif de vision artificielle disposés au-dessus du convoyeur 11 permettent de contrôler la position effective de la couche 15. Un exemple de palette en cours de constitution 15' est illustré en pointillé sur la figure 1. Avantageusement, les robots 1 commencent par constituer les rangées aval de la couche. Sur la figure 2, on peut voir un exemple de couche 15 constituée par le dispositif de la figure 1. Les lots A1 à A18 ont été déposés par le robot 1 disposé à gauche du convoyeur 11 sur la figure 1. Les lots B1 à B18 ont été déposés par le robot 1 disposé sur la figure 1 à droite du convoyeur 11. Il est à noter que la disposition des lots déposés par le robot de gauche n'est pas nécessairement la même que celle des lots déposés par le robot de droite.

Les références 1.1 à 1.5. désignent l'origine du bras 3 des robots 1 relative au convoyeur 11 de réception et de constitution de couches lors du défilement de ce dernier. Les traits mixtes 19 symbolisent la position du bras lors de la dépose des lots. Dans l'exemple illustré, les unités de vente A3,A6,B5,B6,B7,B10,B13 et B16 ont été déposées individuellement, tandis que les autres unités de vente ont été déposés par lots de deux. Il est à noter que la dépose à cadence rapide est facilitée par le maintien d'espaces 21 entre lots, espaces qui seront avantageusement réduits ou qui seront annulés lors de la conformation de la couche 15.

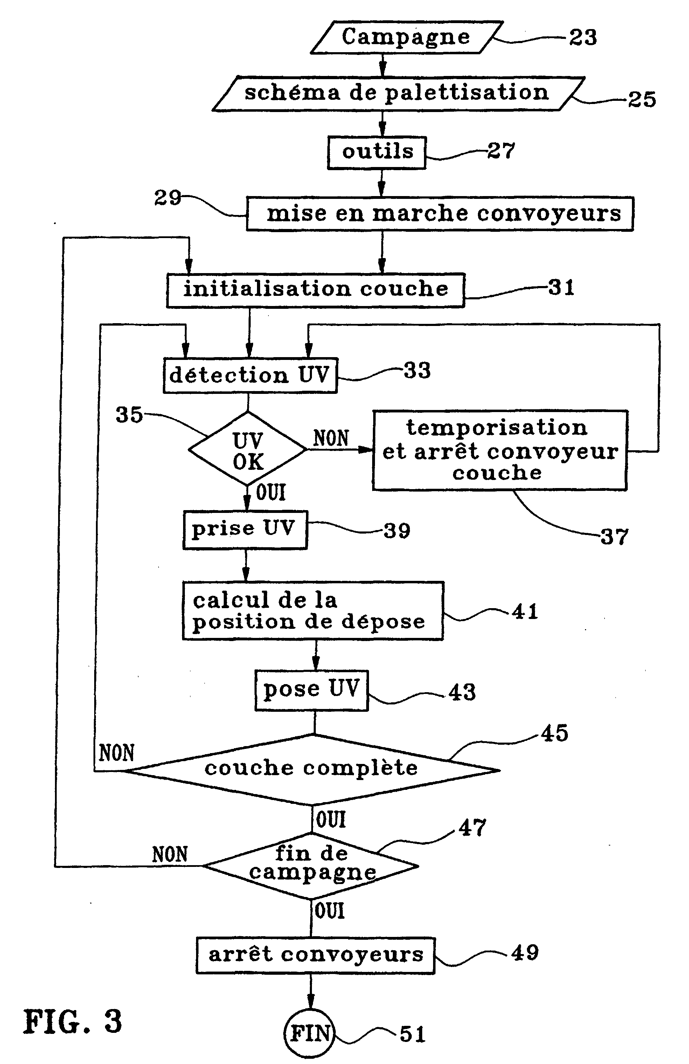

Sur la figure 3 on peut voir un organigramme de l'exemple préféré de réalisation du procédé de constitution de couches selon la présente invention.

En 23, l'automate programmable des robots 1 ou un ordinateur de supervision charge les données concernant la campagne de palettisation à réaliser.

Il est à noter que le dispositif selon la présente invention permet de généraliser la notion classique de "campagne de palettisation". La campagne peut correspondre à la palettisation d'une partie d'une commande d'un client, d'une commande d'un client, de plusieurs commandes d'un client, de certaines parties de plusieurs commandes de plusieurs clients ou de plusieurs commandes de plusieurs clients. Il s'agit en fait des couches et/ou des palettes à réaliser à un moment donné. La flexibilité de l'outil de palettisation selon la présente invention permet de s'affranchir des organisations de production et de palettisation de type connu, notamment de palettisation par palettes homogènes monoproduits. Toutefois, pour ne pas perturber les plans de production déjà établis et les habitudes des responsables de palettisation, la réalisation de diverses palettes peut s'opérer de manière classique, c'est-à-dire les divers types d'unités de vente les uns après les autres. En variante avantageuse, le dispositif selon la présente invention permet, en envoyant et/ou en prélevant sur les convoyeurs 9 les lots désirés, de constituer au fur et à mesure les couches nécessaires à la constitution des palettes homogènes ou hétérogènes.

On va en 25.

En 25, l'automate programmable des robots 1 charge (ou calcule) le ou les schéma(s) de palettisation à réaliser.

On va en 27.

En 27, l'automate programmable détermine le ou les outils à mettre en oeuvre en fonction des unités de vente élémentaires à traiter. Avantageusement, l'outil adapté est chargé automatiquement, par exemple à partir d'un barillet ou d'un magasin susceptible d'être atteint par l'extrémité du bras 3 de chaque robot 1. En variante, l'outil adapté est chargé par un opérateur, par exemple sur invitation du robot. Avantageusement, le robot vérifie l'adéquation de l'outil demandé avec l'outil nécessaire à la réalisation de la campagne chargée en 23.

On va en 29.

En 29, on effectue une initialisation de la campagne et notamment la mise en marche des convoyeurs 9 et 11.

On va en 31.

En 31 on effectue l'initialisation de la couche à traiter.

On va en 33.

En 33, on effectue la détection des lots 6 à palettiser, notamment d'unités de vente.

Avantageusement, on effectue en 35 et 37 un test de l'adéquation de l'unité de vente amenée par le convoyeur 9 avec l'unité de vente nécessaire à la constitution de la couche.

En 35, on effectue la vérification, par exemple par reconnaissance de forme, par un dispositif disposé au-dessus du convoyeur 9 ou toute autre méthode de l'adéquation du type de lot 6, de son orientation et de son état.

En cas d'inadéquation, on va en 37.

En cas d'adéquation, on va en 39.

En 37, le robot ne prend pas le lot 6 non conforme qui sera rejeté dans le magasin de réception 17. Le robot effectue une temporisation nécessaire à la réception du lot 6 suivant. Si cela s'avère nécessaire le robot envoie un signal de demande d'arrêt momentané du convoyeur de réception et de constitution de couches 11.

On va en 39.

En 39, le bras 3 du robot 1 prend un lot 6 par exemple une unité de vente.

On va en 41.

En 41, l'automate programmable du robot 1 calcule la position de dépose du lot 6 pris en 39.

On va en 43.

En 43, le robot 1 effectue la pose sur le convoyeur 11 du lot pris en 39.

On va en 45.

En 45, l'automate programmable du robot 1 détermine si la couche 15 en cours de constitution est complète. La détermination peut être effectuée par calcul des lots 6 déposés et/ou vérifiés par acquisition des données par des capteurs non représentés.

Si non on va en 33.

Si oui on va en 47.

En 47, l'automate programmable du robot 1 détermine par calcul en comparant le nombre de couches constitué par rapport au nombre de couches requis, si la campagne de palettisation chargée en 23 est terminée.

Si oui on va en 49.

Si non on va en 31.

Il est à noter qu'en 31, on initialise la couche suivante désirée qui n'est pas nécessairement la même que la couche précédente. L'initialisation des diverses couches en 31 correspond aux caractéristiques de la campagne chargée en 23 et du ou des schéma(s) de palettisation chargés en 25.

En 49, l'automate programmable du robot 1 envoie un message de fin de tâche permettant l'arrêt des convoyeurs 9 et 11.

On va en 51.

En 51 la campagne de constitution de couches est terminée.

En variante, à la fin d'une campagne, en 47, on enchaîne une nouvelle campagne en allant en 23.

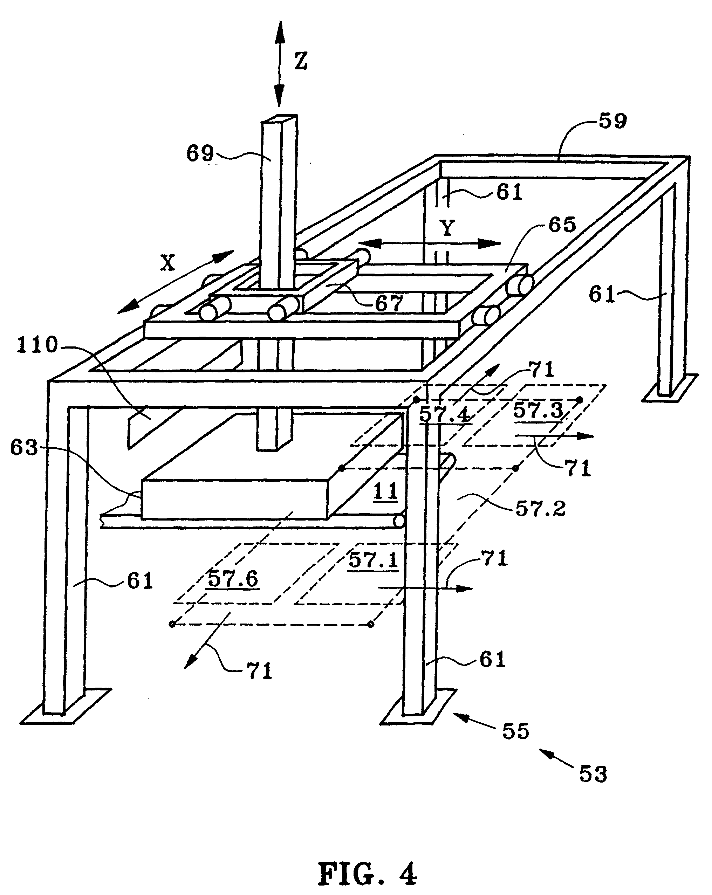

Les couches 15 constituées sur le convoyeur 1 sont convoyées au fur et à mesure de leur constitution vers un dispositif de constitution de couches. Il peut s'agir par exemple d'un dispositif d'empilement de couches d'un palettiseur de type connu. Avantageusement, on met en oeuvre un robot flexible d'empilement de couches selon la présente invention dont un exemple est illustré sur la figure 4. Le robot 53 d'empilement des couches est par exemple un robot cartésien à 3 degrés de liberté selon les axes X, Y et Z orthogonaux. Le robot 53 comporte un châssis 55 s'étendant au-dessus d'une zone 57.2 de réception de couches, par exemple de l'extrémité aval du convoyeur 11 de la figure 1 ainsi qu'au-dessus d'au moins une, par exemple de deux, trois, quatre (comme illustré) ou plus zones de constitution de palettes 57.1, 57.3, 57.4, 57.6 par empilement de couches successives. Dans l'exemple illustré sur la figure 4, l'extrémité aval du convoyeur 11 aboutit sensiblement au milieu du dispositif 53 d'empilement des couches, deux emplacements 57.1 et 57.3 de constitution de palettes étant disposés de chaque côté du convoyeur 11. Avantageusement, comme symbolisé par les flèches 71, deux emplacements 57.1 et 57.3 peuvent être évacués par l'avant c'est-à-dire à l'opposé de l'arrivée du convoyeur 11 les deux autres emplacements 57.4 et 57.6 étant évacués latéralement. En variante, un des emplacements 57 de constitution de palettes, par exemple l'emplacement 57.6, peut être remplacé par un magasin d'intercalaires qui peut être distribué entre deux couches par les dispositifs de préhension de couches 63 ou par un dispositif de distribution d'intercalaires. Le châssis 55 comporte par exemple un cadre rectangulaire 59 porté à ses quatre coins par des montants 61. Un dispositif préhenseur de couches 63 est monté en translation horizontale selon l'axe X parallèle aux grands côtés du cadre 59 et selon l'axe Y parallèle aux petits côtés du cadre 59 ainsi qu'en translation verticale selon l'axe Z parallèle aux montants 61, sur une hauteur au moins égale à celle de la plus grande charge palettisée que l'on veut pouvoir constituer. Dans l'exemple illustré sur la figure 4, le robot 53 comporte un pont 65 roulant sur les grands côtés du cadre 59 et portant lui-même un pont 67 roulant sur le pont 65 parallèlement aux petits côtés du cadre 59. Sur le pont 67 est monté une colonne 69 munie d'un mécanisme de montée et de descente, par exemple à crémaillère (non illustré), du dispositif 63 préhenseur de couches.

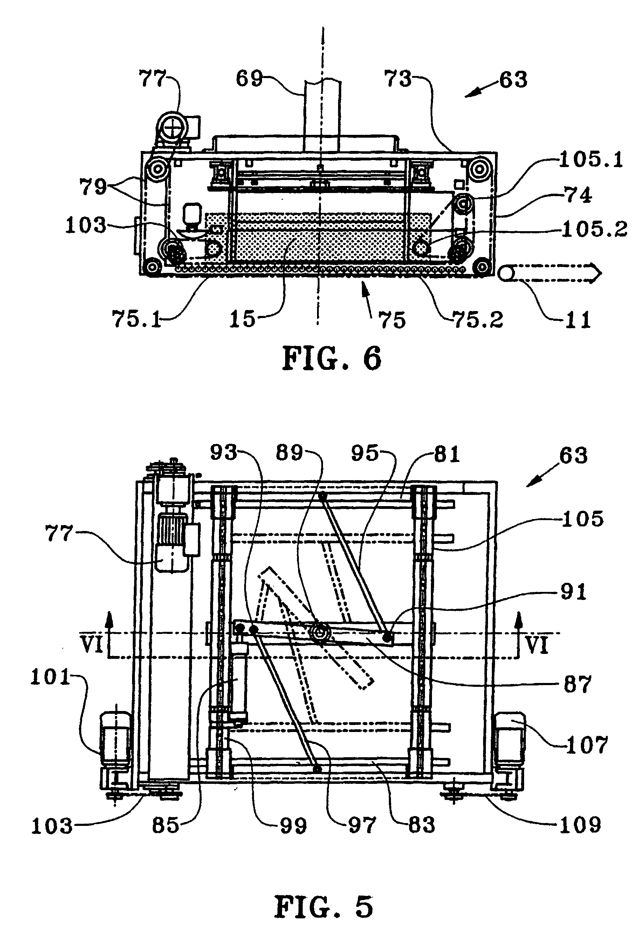

Selon le type de fardeaux palettisés, on peut, par exemple, mettre en oeuvre des dispositifs préhenseurs de couches 63 de types aspirant, magnétique, à fourche ou, avantageusement à rideaux tels qu'illustrés sur les figures 5 et 6. Le dispositif 63 comporte un châssis 73, par exemple en tôle, attelé à la colonne 69 du robot d'empilement des couches. Avantageusement, le châssis 73 comporte une ouverture latérale 74 de chargement d'une couche de fardeaux à palettiser.

Un rideau 75 formé par deux demi-rideaux 75.1 et 75.2 constitués de rouleaux sensiblement jointifs s'étendant sur toute la largeur du dispositif 63 parallèlement à l'ouverture 74 est entraîné par un moteur 77 par l'intermédiaire de deux chaînes 79 reliées entre-elles de manière à former une boucle fermée. Les rouleaux du rideau 75.1 sont reliés au brin supérieur des chaînes 79 et les rouleaux du rideau 75.2 sont reliés au brin inférieur des chaînes de telle manière que l'entraînement des chaînes dans le sens inverse des aiguilles d'une montre entraîne l'ouverture des demi-rideaux 75.1 et 75.2 et au contraire la rotation de sens des aiguilles d'une montre provoque leur rapprochement et leur fermeture de manière à ce qu'ils forment le plancher du dispositif 63 soutenant une couche 15 à empiler. Avantageusement, le dispositif 63 comporte des conformateurs permettant de réduire les espaces 21.

Le conformateur latéral comporte deux bras parallèles 81 et 83 de conformation latérale manoeuvrés par un vérin pneumatique 85 agissant sur un embiellage comprenant une barre 87 montée en rotation autour d'un point 89 situé à mi-distance entre des points de fixation 91 et 93 des tringles 95 et 97 reliée respectivement aux bras de conformation 81 et 83. Comme illustré en traits mixtes, l'extension du vérin 85 assure la rotation de la barre 87 et le rapprochement parallèles des bras 81 qui, en prenant appui sur les faces opposées de la couche 15 assurent la réduction ou, avantageusement la disparition des espaces 21. Dans une variante avantageuse (non représentée), les barres de conformation latérales 81 et 83 sont entraînées par un moteur muni d'un codeur permettant un positionnement sur commande notamment par programmation. Une barre de conformation avant 99 située à l'opposé de l'ouverture 74 est entraînée par un moteur 101, muni d'un codeur de position, par l'intermédiaire d'une chaîne 103. Une barre de conformation 105 arrière du côté de l'ouverture 74 est entraînée par un moteur 107, muni d'un codeur de position, par l'intermédiaire d'une chaîne 109. La barre de conformation arrière 105 est susceptible de s'effacer dans une position référencée 105.1 sur la figure 6 de manière à permettre l'amenée d'une couche 15 par l'ouverture 74 et une position référencée 105.2 correspondant à la conformation d'une couche 15 en place dans les dispositifs préhenseurs de couches 63.

Le dispositif 63 préhenseur de couches est amené par le robot portique 53 en position de réception de couches 57.2, aligné avec l'extrémité du convoyeur 11.

En variante, le robot d'empilement de couches 53 peut être avantageusement équipé d'un dispositif de rotation du préhenseur de couches permettant la modification sur commande de l'orientation, par exemple sur 90° de la couche à empiler.

La couche est introduite par poussée sur le double rideau 75 du dispositif 63 préhenseur de couches et prend appui sur la barre de conformation avant 99 assurant ainsi son premier référencement spatial. La barre de conformation arrière 105 passe de la position de réception 105.1 à la position de conformation 105.2 et appuie sur la couche assurant son second référencement. Le dispositif préhenseur 63 monte en position haute puis se déplace horizontalement pour se placer au-dessus de la palette réceptrice. La position haute peut correspondre à la hauteur maximale que peut atteindre le dispositif 63 préhenseur de couches. Dans une variante perfectionnée, la position haute peut correspondre à la hauteur minimale permettant le dépôt de la couche en cours sur la couche précédente ou sur la palette sans risque de collision avec un quelconque élément du robot 53 ou d'une palette en cours de constitution.

Pendant le trajet du dispositif 63 préhenseur de couches, les barres de conformation latérales 81 et 83 viennent compacter latéralement la couche assurant ainsi un troisième référencement. Lorsque le dispositif 63 préhenseur de couches est parvenu au-dessus de la palette réceptrice, il descend et s'arrête à faible hauteur au-dessus de la couche précédente, par exemple à un centimètre. Les demi-rideaux 75.1 et 75.2 s'écartent symétriquement déposant ainsi la couche qui est toujours guidée sur quatre côtés par les barres de conformation 81, 83, 99 et 105. Le dispositif préhenseur 63 illustré sur les figures 5 et 6 est particulièrement performant car il permet l'adaptation automatique au format de couches à empiler, les demi-rideaux à rouleaux 75 permettent le transfert de couches composées de tous types de fardeaux, le transfert étant effectué en toute sécurité en évitant le risque de chute de fardeaux.

Toutefois, la mise en oeuvre d'autres types de dispositifs 63 préhenseurs de couches ne sort pas du cadre de la présente invention. De même, le robot 53 peut être muni d'une pluralité de dispositifs 63 préhenseurs de couches susceptibles d'être utilisés alternativement. Le dispositif 63 qui n'est pas en cours d'utilisation est avantageusement stocké sur un des emplacements 57, par exempte sur l'emplacement 57.4. Le robot 53 sélectionne le dispositif 63 préhenseur de couches le mieux adapté à la manipulation des couches à empiler.

Nous allons maintenant expliquer un exemple de campagne d'empilement de couches par le robot 53. Le dispositif 63 préhenseur de couches se place dans le prolongement du convoyeur 11 (ou d'un convoyeur de transfert non représenté), l'ouverture 74 étant dirigée vers le convoyeur 11. La première couche est poussée par le pousseur 110 sur le rideau 75 du dispositif 63 préhenseur de couches, puis transférée sur une palette disposée en 57.1. Cette opération se renouvelle jusqu'à ce que la palette soit complètement chargée. Les couches suivantes sont déposées sur une palette disposée en 57.3.

L'évacuation de la charge palettisée de l'emplacement 57.1 selon la flèche 71 effectuée en temps masqué pendant la palettisation de la palette à l'emplacement 57.3. De même, lorsque la palette de l'emplacement 57.3 est complètement chargée les couches suivantes seront déposées sur une nouvelle palette amenée entre temps à l'emplacement 57.1.

En 57.4 on peut, simultanément, constituer une palette hétérogène ou une palette incomplète qui est alimentée en alternance avec la palettisation des palettes en 57.1 ou 57.3. Lorsque la palette est disposée en 57.4, le robot 53 assure la dépose du nombre de couches de la campagne en cours correspondant à la commande. Une charge palettisée est dite hétérogène lorsque toutes les couches qui la constituent ne sont pas identiques. Une charge palettisée est dite incomplète lorsqu'elle comporte un nombre de couches inférieur à celui des autres charges palettisées correspondant au même schéma de palettisation ou lorsque la dernière couche comporte un nombre d'unités de vente inférieures à celui des autres couches. Une charge palettisée incomplète permet de compléter une commande d'un client de manière à fournir le nombre d'unités de vente désiré.

Il est à noter que l'alimentation du robot 53 de la figure 4 par le dispositif de constitution de couches de la figure 1 permet d'envoyer une succession de couches 15 différentes sur le convoyeur 11. Dans un tel cas, chacun des emplacements 57 permet la constitution de charges palettisées hétérogènes. Même dans un tel cas, un des emplacements 57, par exemple l'emplacement 57.4, peut être chargé avec une charge palettisée partiellement constituée en vue de la compléter par des couches de natures différentes pour former une charge palettisée hétérogène.

Le robot 53 selon la présente invention peut être équipé des moyens de dépôt d'intercalaires. Par exemple, le dispositif 63 préhenseur de couches comporte des moyens, notamment des ventouses escamotables (non représentées) permettant le transfert d'intercalaires à partir d'un magasin d'intercalaires situé par exemple en 57.6 sur une couche d'une charge palettisée en cours de constitution. Dans une variante de réalisation permettant un débit plus rapide, un distributeur 111 (figure 8), par exemple rotatif, permet le transfert d'un intercalaire sur la couche arrivant par le convoyeur 11.

Dans une variante de réalisation, le robot 53 comporte des moyens (non illustrés) de transfert interne de palettes vides ou de charges palettisées entre les divers emplacements 57.

Il est bien entendu que la mise en oeuvre d'autres types de robots 53 d'empilement de couches comme par exemple des robots portiques à deux axes, des robots cartésiens trois axes sur rails, des robots à deux bras articulés avec déplacement vertical linéaire appelés robot scara ou robot scara sur rails, ainsi que des robots polyarticulés ou sphériques, ne sort pas du cadre de la présente invention.

Le robot 53 d'empilement de couches de la figure 4 est particulièrement flexible dans la mesure où il comporte une pluralité d'emplacements 57 (57.1., 57.3, 57.4 et 57.6) dont au moins un est destiné à recevoir une palette de la charge palettisée en cours de constitution, les autres emplacements 57 pouvant eux recevoir des affectations différentes comme servir de magasin de dispositifs 63 préhenseurs de couches ou de magasins d'intercalaires.

Avantageusement, le robot 53 comporte des moyens de détection de la présence d'une palette, du manque d'intercalaires vides et/ou de détection de couches non conformes notamment des couches endommagées ou comportant des fardeaux endommagés.

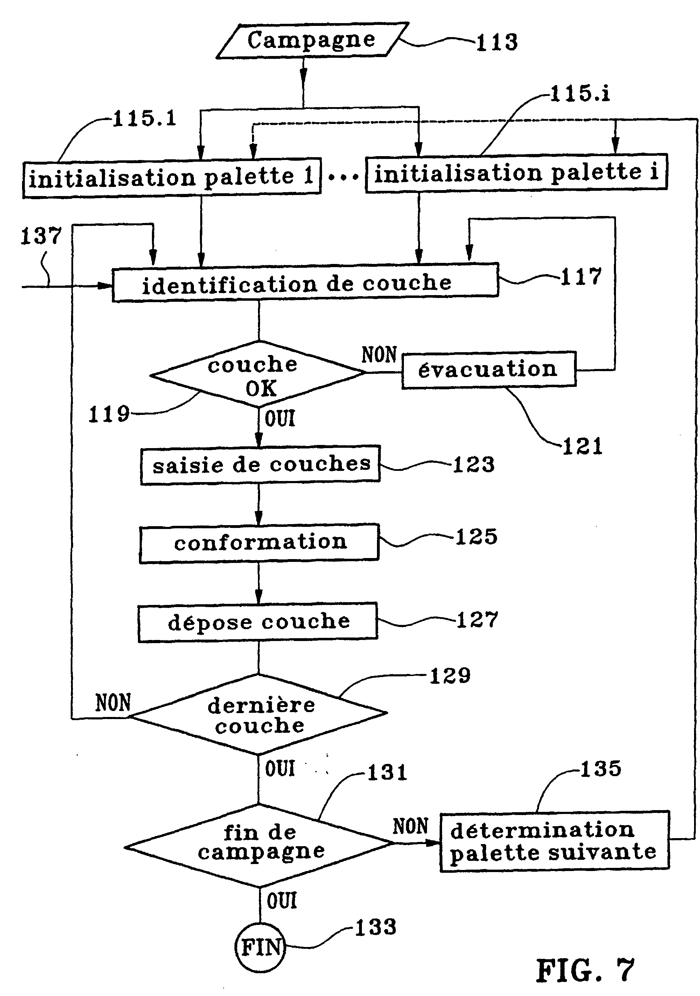

Sur la figure 7, on peut voir un organigramme de fonctionnement du robot 53 d'empilement de couches.

En 113, un ordinateur de supervision et/ou l'automate programmable du robot 53 reçoit, par exemple à partir d'un ordinateur de gestion de production les informations sur la campagne de palettisation à effectuer. Ces informations concernent notamment le dispositif 63 préhenseur de couches à utiliser, les affectations des divers emplacements 57 en tant que point de dépose, la présence des palettes hétérogènes etc ; les dimensions des couches à traiter, le nombre de couches par palette, le nombre de palettes, le nombre et la position des intercalaires, l'orientation des couches, etc... En cours de campagne, ces informations pourront éventuellement être complétées par des informations particulières notamment sur la présence d'une palette hétérogène à compléter.

On va en 115.

En 115, on initialise l'empilement des couches sur les palettes correspondant aux divers emplacements 57 mis en oeuvre en tant qu'emplacement de dépose de couches. Dans l'exemple illustré sur la figure 4, le nombre i d'emplacements 57 mis en oeuvre pour la constitution de couches correspondant aux initialisations des palettes 115.1 à 115.i est compris entre 2 et 4.

En variante, le nombre i de types de palettes susceptibles d'être initialisées à l'étape 115 n'est pas lié au nombre d'emplacements 57 du robot 53. Avantageusement, en 113, l'ordinateur de supervision et/ou l'automate programmable du robot 53 reçoit le schéma de palettisation de tous les types de charges palettisées dont la palettisation lui a été assignée pour la présente campagne de palettisation. Ainsi, un même emplacement 57 peut, successivement et automatiquement, au cours d'une même campagne, être mis en oeuvre pour réaliser divers types de charges palettisées grâce aux possibilités de changement de palettes offertes par l'utilisateur de chariots automatiques, notamment filoguidés.

On va en 117.

En 117, on effectue la détection ou, avantageusement l'identification de la couche 15 arrivant à partir du convoyeur 11.

On va en 119.

En 119, on vérifie la conformité de la couche.

Si la couche n'est pas conforme on va en 121.

Si la couche est conforme on va en 123.

En 121, on assure l'évacuation de la couche non conforme par exemple d'une couche disloquée, d'une couche comportant des fardeaux endommagés, une couche présentant une orientation différente de la couche prévue ou une couche ne correspondant pas au schéma de palettisation en cours.

De 121 on va en 117.

En 123, on saisit la couche 15 amenée par le convoyeur 11.

On va en 125.

En 125, on assure la conformation de la couche 15 saisie.

On va en 127.

En 127, on effectue la dépose de la couche sur une palette en cours de constitution.

On va en 129.

En 129, on détermine si la couche déposée était la dernière couche d'une palette.

Si non on va en 117.

Si oui on va en 131.

En 131, on vérifie si on se trouve en fin de campagne.

Si oui, on va en 133 ce qui provoque l'arrêt du fonctionnement du robot 53.

Si non on va en 135.

En 135, on effectue la détermination de la palette suivante.

On va en 115 pour initialiser la palette correspondant à l'emplacement 57 de constitution de la palette suivante.

En variante, l'étape de détermination de la palette suivante est effectuée après l'étape 127 de dépose de couche, ce qui permet la dépose alternative des couches sur une pluralité de palettes.

La flèche 137 symbolise la réception d'une consigne de palettiser une palette hétérogène par exemple une palette disposée en 57.4.

Sur la figure 8, on peut voir un exemple de réalisation d'un dispositif de palettisation flexible IFP selon la présente invention associant un dispositif de constitution de couches analogue au dispositif illustré sur la figure 1 mais comportant des convoyeurs 9 d'amenée d'unités de vente 5 adjacentes au convoyeur 11 de constitution de couches alimentant en couches à empiler un robot 53 d'empilement de couches analogue à celui illustré sur la figure 4. Dans l'exemple illustré, le convoyeur 11 de réception et de constitution de couches débouche au milieu du grand côté du robot 53 à l'emplacement 57.5'. Pour les dispositifs de préhension de couches assurant une préhension verticale les couches 15 sont prélevées à l'emplacement 57.5'. Par contre, le dispositif 63 à double rideaux à chargement latéral illustré sur les figures 5 et 6, comporte avantageusement une zone de chargement 57.2' située dans l'alignement de l'extrémité du convoyeur 11. Dans ce mode de réalisation, un pousseur 110 est disposé en vis-à-vis de l'emplacement 57.2'. Le pousseur 110 s'efface tout d'abord pour laisser passer une couche 15 sur le convoyeur 11 jusqu'à l'emplacement 57.5' puis, s'abaisse et pousse la couche dans l'ouverture 74 du dispositif 63 préhenseur de couches.

L'alimentation en palettes vides et l'évacuation des charges palettisées du robot 53 peut être effectuée manuellement. Toutefois, il est avantageux d'utiliser un dispositif d'alimentation automatique en palettes vides, par exemple un distributeur 137 de palettes vides comportant un convoyeur aérien. L'évacuation des charges palettisées est avantageusement effectuée par des chariots ou des transpalettes 139 autonomes et automatiques. Ces chariots peuvent par exemple être guidés par un marquage au sol ou dans le sol (ligne de guidage, chariot filoguidé, etc...), ou par des signaux électromagnétiques ou autres (chariots guidés par laser, etc...).

En 143, on a illustré les divers outils susceptibles d'équiper les bras 3 des robots 1.

Sur la figure 8, les robots 1 sont munis des bras 3 articulés, les cercles 141 symbolisant la portée des bras 3.

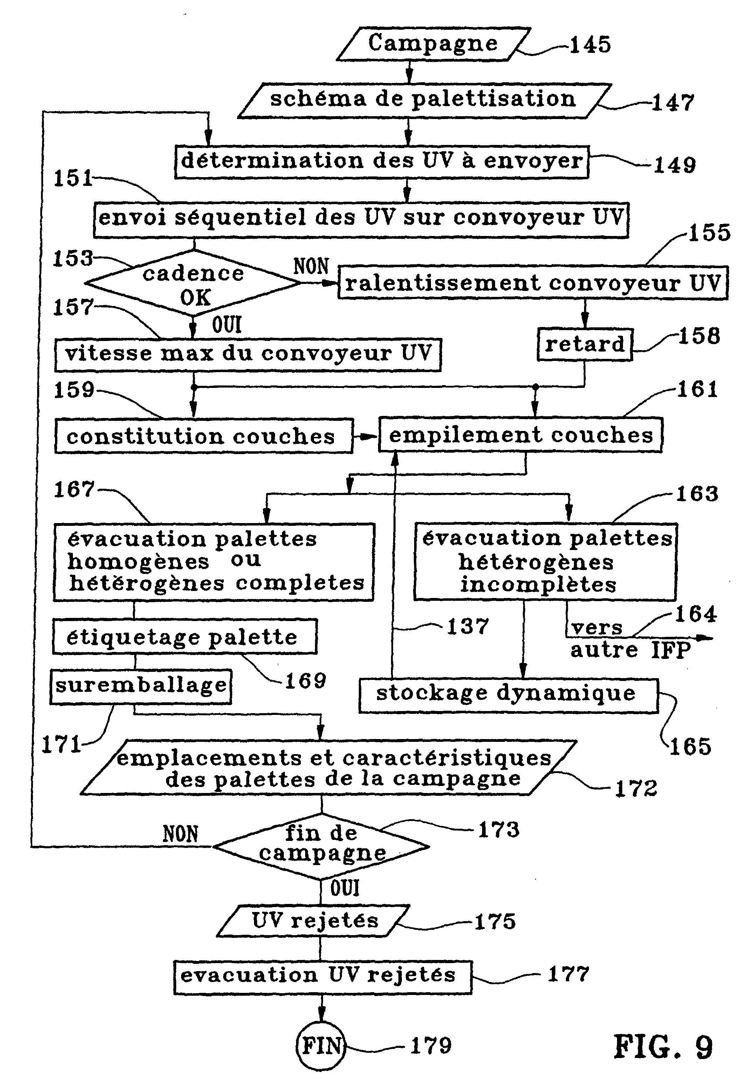

Sur la figure 9, on peut voir un organigramme illustrant un exemple de fonctionnement d'un dispositif de la figure 8 disposé, par exemple, en fin d'une ligne de production.

En 145, un ordinateur chargé de la gestion de flux reçoit, par exemple à partir d'une saisie ou, avantageusement à partir d'une application de gestion des commandes passées par les clients les caractéristiques d'une campagne de palettisation.

On va en 147.

En 147, l'ordinateur de gestion de flux ou de supervision de production détermine les schémas de palettisation correspondant aux unités de vente commandées par le client et communique les schémas de constitution de couches aux robots 1 et les schémas d'empilement de couches au robot 53. Il peut également, sans sortir du cadre de la présente invention, élaborer des consignes de production envoyées à une ligne de production ou de conditionnement non représentée.

On va en 149.

En 149, on détermine les unités de vente à envoyer sur les convoyeurs 9.

On va en 151.

En 151, on initialise l'envoi séquentiel des unités de vente sur le ou les convoyeur(s) 9.

On va en 153.

En 153, les robots 1 indiquent si la cadence d'arrivée des unités de vente 5 sur les convoyeurs 9 est compatible avec la constitution de couches.

Si non on va en 155.

Si oui on va en 157.

En 155, on ralentit la cadence d'alimentation des convoyeurs 9.

On va en 158.

En 158, on génère un retard permettant au robot 1 de reprendre une cadence de régime continu.

On va en 159 et en 161.

En 157, on augmente au maximum le débit d'alimentation des convoyeurs 9 en unités de vente 5.

En variante, les convoyeurs 9 ont une vitesse fixe et sont conçus pour accumuler les unités de vente assurant ainsi une régulation en cas de ralentissement des robots 1 qui constituent les couches.

On va en 159 et 161.

En 159, les robots 1 assurent la constitution de couches. L'étape 159 correspond par exemple à l'organigramme de la figure 3.

On va en 161.

En 161, à partir du moment où il reçoit la première couche 15 par le convoyeur 11, le robot 53 assure l'empilement des couches et la constitution des charges palettisées. L'étape 159 démarre avant l'étape 161, puis ces deux étapes se chevauchent dans le temps jusqu'à l'empilement des dernières couches après l'arrêt de l'étape 159. L'étape 161 correspond par exemple à l'organigramme de la figure 7.

On va en 163 et en 167.

En 167, on assure l'évacuation et le transfert des charges palettisées complètes.

On va en 169.

En 163, on assure l'évacuation et le transfert des palettes hétérogènes incomplètes qui seront dirigées soit vers un autre IFP (en 164) qui traite les unités de vente nécessaires au complément de la palette, soit vers un stockage dynamique (en 165) qui la conservera jusqu'à ce qu'un IFP traite les unités de vente nécessaires. Des palettes hétérogènes peuvent donc être réalisées sur plusieurs campagnes avec des stockages temporaires entre chaque campagne.

En 137, lors de l'empilement des couches suivantes désirées, les palettes incomplètes sont renvoyées du stockage dynamique 165 vers l'empilement des couches 161.

En 169, on assure, avantageusement, l'étiquetage des charges palettisées.

On va en 171.

En 171 on assure avantageusement, le suremballage des charges palettisées.

On va en 172.

En 172, on communique au système de gestion de production ou de gestion des flux l'emplacement et les caractéristiques des diverses palettes de la campagne en vue de leur transfert sur un moyen de transport, par exemple sur des camions.

On va en 173.

En 173, on vérifie si on est en fin de campagne.

Si non, on va en 149.

Si oui, on va en 175.

En 175, on communique au système informatique de gestion de production ou de gestion de flux les informations concernant des éventuelles unités de vente ou couches rejetées.

On va en 177.

En 177 on assure l'évacuation des unités de vente et/ou d'éventuelles couches rejetées.

On va en 179.

En 179 la campagne de palettisation est terminée.

Il est bien entendu que la mise en oeuvre des dispositifs selon la présente invention sans étiquetage ou suremballage ne sort pas du cadre de la présente invention. De même, l'étiquetage des palettes, peut sans sortir du cadre de la présente invention être effectué par le robot 53 à l'aide d'un dispositif d'impression d'étiquettes, comportant par exemple une inscription alphanumérique complétée par un code barre et associé à un dispositif d'apposition d'étiquettes.

Il est à noter qu'une fois qu'on a initialisé la constitution de couches, cette opération s'effectue simultanément avec l'empilement de couches qui est ainsi réalisé en temps masqué. De même, une fois que l'on a constitué au moins une charge palettisée, l'évacuation des charges palettisées (étape 167), leur étiquetage (étape 169) et leur suremballage (étape 171) et leur stockage, s'effectuent en temps masqué.

En variante, notamment dans le cas de campagnes de palettisation courtes, le suremballage peut commencer après la fin de la campagne de palettisation.

Les chaînes de production modernes, notamment les chaînes d'embouteillage de boissons et de leur groupage en unités de vente atteignent des cadences extrêmement élevées. Les dispositifs de palettisation flexible selon la présente invention peuvent être directement alimentés par la sortie d'une ligne de production pour palettiser en temps réel, c'est-à-dire sans stockage intermédiaire des unités de vente produites. Pour augmenter les cadences on peut tout d'abord augmenter la cadence individuelle des robots 1 et 53. Si cette solution n'est pas adaptée ou n'est pas suffisante, on peut utiliser les robots 1 et/ou les robots 53 disposés en série ou en parallèle. Il est a noter que la faible surface au sol occupée par les dispositifs selon la présente invention facilite la constitution de grandes unités de palettisation. Sur la figure 10, on peut voir une unité de palettisation comportant, disposés en parallèle quatre îlots de palettisation flexibles IPF de la figure 8 alimentés en unité de ventes formant les fardeaux élémentaires par la sortie 181 d'une ligne de production. Dans l'exemple illustré, la sortie 181 de la ligne de production alimente en parallèle, deux unités 183 d'emballage ou de groupage. Chaque unité 183, par exemple par des convoyeurs interconnectés et comportant des moyens pour diriger les unités de vente vers les îlots flexibles de palettisation IFP à mettre en oeuvre, alimente les deux convoyeurs 9 de deux îlots flexibles de palettisation IFP. Avantageusement, la distance entre deux îlots flexibles de palettisation IFP consécutifs est sensiblement égale à la largeur nécessaire au passage d'un chariot ou d'un transpalette 139 qui desservent en alternance les emplacements 57.6 et 57.4 des deux îlots flexibles de palettisation consécutifs. Dans cette disposition compacte, les quatre îlots flexibles de palettisation IFP occupent une largeur par exemple sensiblement égale à 28 mètres. La disposition en parallèle ou en batterie des îlots flexibles de palettisation permet d'améliorer la gestion des flux en affectant les unités de vente à un ou à plusieurs IFP selon le débit de la ligne de production ou l'importance de la commande à honorer. Un des îlots flexibles de production peut être provisoirement arrêté pour effectuer un entretien provisionnel en basculant sa tâche sur les autres îlots flexibles de palettisation. De plus, il est possible d'investir au départ dans un nombre d'îlots flexibles de production IFP réduit et de compléter par d'autres îlots flexibles de palettisation au fur et à mesure que les besoins s'en font sentir.

Les robots 53 des îlots flexibles de palettisation sont alimentés en palettes vides, par exemple par chariots à fourche ou transpalettes, par distributeurs aériens ou par un ensemble automatique de chariots filoguidés. Les charges palettisées homogènes ou hétérogènes sont évacuées par des chariots à fourche, des transpalettes ou des chariots filoguidés ou guidés par faisceaux laser. La mise en oeuvre de chariots autonomes par exemple filoguidés ou guidés par faisceaux laser est particulièrement avantageuse en complément des îlots flexibles de palettisation mis en parallèle, dans la mesure où ils permettent de programmer pour chaque campagne de palettisation, sans perte de temps, les affectations et les trajets optimum à effectuer par chaque chariot notamment pour les palettes hétérogènes constituées aux emplacements de divers robots 53.

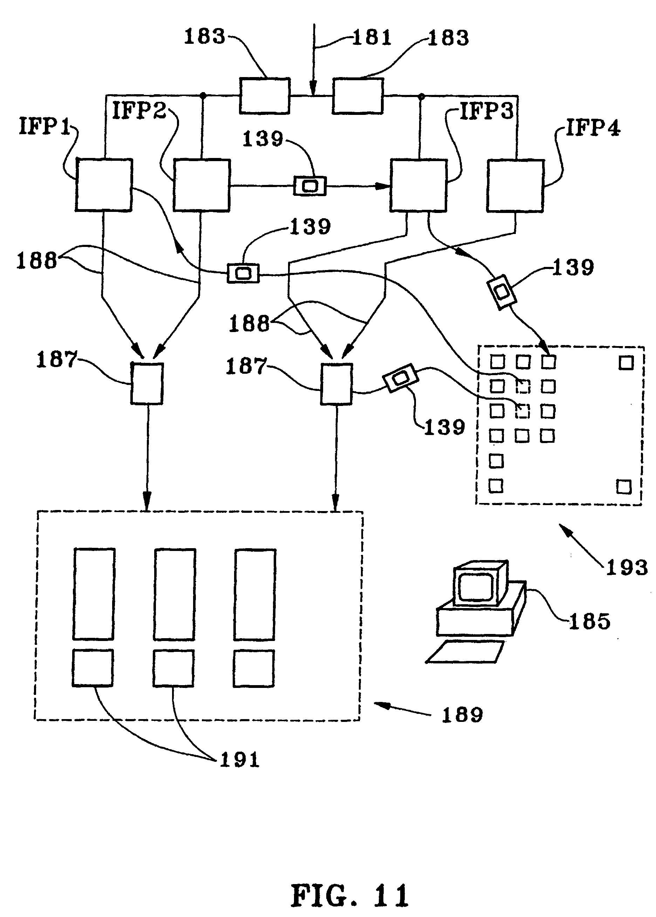

Dans une première variante de réalisation, les palettes hétérogènes sont réalisées par l'envoi sur un même îlot flexible de palettisation des unités de vente devant constituer les divers types de couches des palettes hétérogènes. Toutefois, pour ne pas perturber les habitudes de la palettisation on peut organiser le flux d'alimentation des îlots flexibles de palettisation de manière à éviter ou à limiter au maximum l'entrelacement des divers types de fardeaux ou de couches traités par chacun des îlots flexibles de palettisation. Dans un tel cas, chaque type de colis sera envoyé sur un îlot flexible de palettisation différent. Toutefois, cela n'empêche pas la constitution automatique de palettes hétérogènes par la mise en oeuvre du procédé illustré sur la figure 11. L'ordinateur 185 de supervision de palettisation reçoit une commande de réalisation de n palettes hétérogènes qu'il affecte aux chariots 139 disponibles. Une palette vide est amenée par exemple à l'emplacement 57.4 d'un robot 53 d'un îlot flexible de palettisation recevant les couches 15 devant constituer la ou les couches basses de la palette hétérogène. Après la constitution des couches basses, un chariot 139 assure la reprise de la palette partiellement chargée et son acheminement à un des emplacements 57, par exemple à l'emplacement 57.4 du robot 53 de l'îlot flexible de palettisation constituant la ou les couches suivantes. L'opération peut être renouvelée jusqu'à la constitution de la palette complète comportant tous les types de couches désirés pour être ensuite acheminée à l'étiquetage, puis au poste de suremballage 187 avant d'être stockée dans une zone d'évacuation 189 ou avantageusement directement chargée sur un moyen de transport 191, par exemple sur un camion. Pour les campagnes prévoyant la constitution d'une quantité de palettes hétérogènes supérieures au nombre de chariots 139 disponibles, on affecte une zone 193 de stockage dynamique des palettes en cours de constitution. Les chariots 139, sur commande de l'ordinateur 185 de supervision, déposent à un emplacement indiqué et identifié une palette hétérogène en cours de constitution pour la reprendre au moment où un des îlots flexibles de palettisation sera alimenté en couches qui sont nécessaires pour compléter la palette. Il est à noter que, selon le plan de production de l'usine, la palette en cours de constitution peut séjourner un temps important pouvant atteindre plusieurs heures ou plusieurs jours dans la zone 193 de stockage dynamique.

Avantageusement, les îlots flexibles de palettisation alimentent directement, par exemple par l'intermédiaire de chariots 139 et/ou des convoyeurs 188, les postes de suremballage 187. Toutefois, en variante, toutes ou certaines charges palettisées peuvent tout d'abord séjourner dans la zone de stockage dynamique 193 avant leur transfert par chariot 139 à un poste de suremballage.

Dans l'exemple illustré sur la figure 11, un premier chariot 139 transfère une palette en cours de constitution entre la zone 193 de stockage dynamique et l'îlot flexible de palettisation IFP1, un deuxième chariot 139 transfère une palette en cours de constitution ou une charge palettisée de l'îlot flexible de palettisation IFP3 vers la zone 193 de stockage dynamique, un troisième chariot 139 transfère une charge palettisée entre la zone 193 de stockage dynamique et un poste de suremballage 187, et un quatrième chariot 139 transfère une palette en cours de constitution entre l'îlot flexible de palettisation IFP2 et l'îlot flexible de palettisation IFP3.

Avantageusement, l'ordinateur 185 permet de simuler une campagne de palettisation avant son lancement de manière à visualiser les incohérences ou les problèmes que l'on risque de rencontrer ou, au contraire, pour estimer les délais nécessaires à la réalisation de la campagne de palettisation pour pouvoir indiquer à un ou aux clients les délais de livraison des charges palettisées commandées.

Il est bien entendu que la réalisation de charges sans palettes, constituées par un empilement de couches, ne sort pas du cadre de la présente invention.

La présente invention s'applique à la manutention au stockage et au transport de produits, notamment en fin de ligne de production.

La présente invention s'applique principalement à la manutention au stockage et au transport de produits provenant d'une ligne de production flexible.

## Revendications

1. Dispositif de palettisation d'unités de vente élémentaires (5) sur au moins une palette, ce dispositif comprenant :
- au moins un premier robot (1) pour constituer au moins une couche homogène ou hétérogène (15) d'unités de vente élémentaires (5), qui sont transportées par au moins un convoyeur d'amenée (9), ledit premier robot (1) comportant un bras mobile (3) muni de moyens préhenseurs pour prélever sur le convoyeur d'amenée (9) des lots d'une ou plusieurs unités de vente (5) qui lui sont nécessaires pour former la couche demandée, et les déposer sur un convoyeur de réception (11) en formant une couche homogène ou hétérogène (15), et
- au moins un second robot (53) comportant :
- des moyens de saisie (63) d'une couche homogène ou hétérogène (15) ainsi constituée sur le convoyeur de réception (11),
- des moyens d'entraînement et de guidage des moyens de saisie (63) pour diriger la couche saisie vers au moins deux emplacements de réception (57) de palettes en cours de constitution, pour la déposer à l'un desdits emplacements, selon l'ordre reçu de moyens de commande, sur une couche précédente d'une palette en cours de constitution ou pour former la première couche d'une palette, et
- des moyens (139) pour évacuer temporairement une palette en cours de constitution ou pour évacuer une palette une fois constituée.

2. Dispositif de palettisation selon la revendication 1, **caractérisé en ce que** chaque couche homogène ou hétérogène (15) est constituée à partir de plusieurs premiers robots (1).

3. Dispositif de palettisation selon la revendication 1 ou 2, **caractérisé en ce qu'**il comprend un convoyeur de réception (11), et deux convoyeurs d'amenée (9) disposées de part et d'autre du convoyeur de réception (11).

4. Dispositif de palettisation selon la revendication 3, **caractérisé en ce que** deux robots (1) sont respectivement disposés entre les deux convoyeurs d'amenée (9) et le convoyeur de réception (11).

5. Dispositif de palettisation selon l'une quelconque des revendications précédentes, **caractérisé en ce que** les moyens (63) de saisie de couches (15) du second robot (53) comportent une nacelle dont le fond est constitué par un rideau (75), et **en ce que** la nacelle comporte une ouverture (74) de chargement latéral des couches (15).

6. Dispositif de palettisation selon l'une quelconque des revendications précédentes, **caractérisé en ce que** les moyens (63) de saisie de couches (15) du second robot (53) comportent des moyens conformateurs (81,83,99,105) assurant la cohésion de la couche (15) en cours de dépose sur la palette en cours de constitution.

7. Dispositif de palettisation selon l'une quelconque des revendications précédentes, **caractérisé en ce que** la largeur (L) du convoyeur de réception (11) est sensiblement égale, de préférence légèrement supérieure, à la largeur (L') des couches (15) susceptibles d'être saisies par les moyens (63) de saisie de couches (15).

8. Procédé de palettisation pour réaliser des palettes hétérogènes comportant une pluralité de types de couches empilées, **caractérisé en ce qu'**il comporte les étapes consistant à :
a) former des couches homogènes ou hétérogènes d'unités de vente élémentaires au moyen d'au moins un premier dispositif (1) de constitution de couches, et charger dans un système informatique (185) le schéma de l'empilement des couches d'une palette hétérogène ;
b) déposer la ou les premières couches de la palette à l'aide de plusieurs seconds dispositifs (53) d'empilement de couches;
c) évacuer par un chariot automatique (139) commandé par ledit système informatique (185), la palette en cours de constitution du dispositif (53) d'empilement des couches, dans l'attente de la disponibilité dans un autre dispositif (53) d'empilement des couches, d'un autre type de couches devant être empilées sur la palette hétérogène ;
d) amener la palette en cours de constitution au dispositif (53) d'empilement de couches disposant des couches devant être empilées sur la palette hétérogène en cours de constitution ;
e) répéter les étapes c) et d) jusqu'à la constitution complète de la palette hétérogène ;
f) évacuer la palette hétérogène complète du dispositif (53) d'empilement des couches.

9. Procédé selon la revendication 8, **caractérisé en ce que** lors de l'étape c), la palette en cours de constitution est évacuée vers une zone de stockage dynamique (193) et **en ce que**, lors de l'étape d), la palette en cours de constitution est reprise dans la zone de stockage dynamique (193) pour être amenée à un dispositif (53) d'empilement de couches.

## Claims

1. A palletizing system for palletizing individual sales items (5) on at least one pallet, the system comprising:
at least a first robot (1) for building up at least one uniform or non-uniform layer (15) of individual sales items (5) which are transported by at least one feed conveyor (9), said first robot (1) comprising a moving arm (3) provided with grasping means for removing, from the feed conveyor (9), batches of one or more sales items (5) which are required by the robot to form the required layer, and for depositing them on a receiving conveyor (11) thereby forming a uniform or non-uniform layer (15); and
at least a second robot (53) comprising:
grasping means (63) for grasping a uniform or non-uniform layer (15) built up in this way on the receiving conveyor (11);
drive and guide means for driving and guiding the grasping means (63) in order to direct the grasped layer towards at least two receiving locations (57) for receiving pallets that are being built up, in order to deposit said layer at one of said locations, in response to a command received from control means, on a preceding layer of a pallet that is being built up, or in order to form the first layer of a pallet; and
means (139) for temporarily removing a pallet that is being built up or for removing a pallet once built up.

2. A palletizing system according to claim 1, **characterized in that** each uniform or non-uniform layer (15) is built up from a plurality of first robots (1).

3. A palletizing system according to claim 1 or 2, **characterized in that** it comprises a receiving conveyor (11), and two feed conveyors (9) disposed on either side of the receiving conveyor (11).

4. A palletizing system according to claim 3, **characterized in that** two robots (1) are respectively disposed between the two feed conveyors (9) and the receiving conveyor (11).

5. A palletizing system according to any preceding claim, **characterized in that** the layer-grasping means (63) of the second robot (53) comprise a platform having its bottom constituted by a curtain (75), and **in that** the platform includes an opening (74) for being loaded laterally with layers (15).

6. A palletizing system according to any preceding claim, **characterized in that** the layer-grasping means (63) of the second robot (53) include shaper means (81, 83, 99, 105) for ensuring cohesion of the layer (15) that is being deposited on the pallet that is being built up.

7. A palletizing system according to any preceding claim, **characterized in that** the width (L) of the receiving conveyor (11) is substantially equal to and preferably slightly greater than the width (L') of the layers (15) suitable for being grasped by the means (63) for grasping layers (15).

8. A palletizing method for building up non-uniform pallets each comprising a stack of layers of a plurality of types, the method being **characterized in that** it comprises the steps consisting in:
a) forming uniform and non-uniform layers of individual sales items by means of at least a first apparatus (1) for making up layers, and loading into a computer system (185) a scheme for stacking the layers of a non-uniform pallet;
b) depositing the first layer(s) of the pallet by means of a plurality of second layer-stacking apparatuses (53);
c) using an automatic cart (139) under the control of said computer system (185) to remove from the layer-stacking apparatus (53) the pallet which is being built up, in order to wait for another layer-stacking apparatus (53) to become available for stacking layers of another type that are to be stacked on the non-uniform pallet;
d) taking the pallet that is being built up to the layer-stacking apparatus (53) having layers that are to be stacked on the non-uniform pallet that is being built up;
e) repeating steps c) and d) until the non-uniform pallet has been completely built up; and
f) removing the completed non-uniform pallet from the layer-stacking apparatus (53).

9. A method according to claim 8, **characterized in that** during step c), the pallet which is being built up is removed to a dynamic storage zone (193), and **in that** during step d), the pallet being built up is taken from the dynamic storage zone (193) and brought to the layer-stacking apparatus (53).

## Patentansprüche

1. Vorrichtung zum Palettieren von Elementar-Verkaufseinheiten (5) auf wenigstens einer Palette, wobei diese Vorrichtung umfaßt:
- wenigstens einen ersten Roboter (1) zum Bilden wenigstens einer homogenen oder heterogenen Schicht (15) von Elementar-Verkaufseinheiten (5), die von wenigstens einer Zufuhr-Transporteinrichtung (9) transportiert werden, wobei der erste Roboter (1) einen beweglichen Arm (3) umfaßt, der versehen ist mit Greif-Mitteln zum Nehmen von Sätzen einer oder mehrerer Verkaufseinheit(en) (5) auf der Zufuhr-Transporteinrichtung (9), die nötig sind, damit er die geforderte Schicht bildet, und zum Ablegen auf einer Aufnahme-Transporteinrichtung (11) unter Bildung einer homogenen oder heterogenen Schicht (15); und
- wenigstens einen zweiten Roboter (53), der umfaßt:
- Mittel (63) zum Erfassen einer so auf der Aufnahme-Transporteinrichtung (11) gebildeten homogenen oder heterogenen Schicht (15);
- Mittel zum Antrieb und zur Führung der Erfassungs-Mittel (63) zum Leiten der aufgenommenen Schicht in Richtung auf wenigstens zwei Aufnahme-Stellen (57) von Paletten beim Aufbau, um sie an einer der Stellen gemäß der von Befehlsmitteln erhaltenen Ordnung auf einer vorangehenden Schicht einer Palette beim Aufbau oder zur Bildung der ersten Schicht einer Palette abzulegen; und
- Mittel (139) zum vorübergehenden Entfernen einer Palette beim Aufbau oder zum Entfernen einer einmal aufgebauten Palette.

2. Palettier-Vorrichtung nach Anspruch 1, **dadurch gekennzeichnet, daß** jede homogene oder heterogene Schicht (15) ausgehend von mehreren ersten Robotern (1) aufgebaut wird.

3. Palettier-Vorrichtung nach Anspruch 1 oder Anspruch 2, **dadurch gekennzeichnet, daß** sie eine Aufnahme-Transporteinrichtung (11) und zwei Zufuhr-Transporteinrichtungen (9) umfaßt, die beiderseits der Aufnahme-Transporteinrichtung (11) angeordnet sind.

4. Palettier-Vorrichtung nach Anspruch 3, **dadurch gekennzeichnet, daß** die beiden Roboter (1) jeweils zwischen den beiden Zufuhr-Transporteinrichtungen (9) und der Aufnahme-Transporteinrichtung (11) angeordnet sind.

5. Palettier-Vorrichtung nach einem der vorangehenden Ansprüche, **dadurch gekennzeichnet, daß** die Mittel (63) des zweiten Roboters (53) zum Erfassen der Schichten (15) eine Gondel umfassen, deren Boden von einem Vorhang (75) gebildet wird, und daß die Gondel eine Öffnung (74) zum seitlichen Laden der Schichten (15) umfaßt.

6. Palettier-Vorrichtung nach einem der vorangehenden Ansprüche, **dadurch gekennzeichnet, daß** die Mittel (63) des zweiten Roboters (53) zum Erfassen der Schichten (15) Schrumpfvorrichtungs-Mittel (81, 83, 99, 105) umfassen, die für den Zusammenhalt der Schicht (15) im Verlauf des Ablegens auf der Palette beim Aufbau sorgen.

7. Palettier-Vorrichtung nach einem der vorangehenden Ansprüche, **dadurch gekennzeichnet, daß** die Breite (L) der Aufnahme-Transporteinrichtung (11) im wesentlichen gleich, vorzugsweise ein bißchen größer als die Breite (L') der Schichten (15) ist, die von den Mitteln (63) zum Erfassen der Schichten (15) erfaßt werden können.

8. Verfahren zum Palettieren zum Erstellen von heterogenen Paletten, die eine Mehrzahl von Arten aufgestapelter Schichten umfassen, **dadurch gekennzeichnet, daß** es die Verfahrens-Schritte umfaßt, die bestehen aus den Schritten
(a) Bilden homogener oder heterogener Schichten von Elementar-Verkaufseinheiten mittels wenigstens einer ersten Vorrichtung (1) zum Aufbau von Schichten und Beschicken eines Informations-Systems (185) mit dem Schema des Aufstapelns der Schichten einer heterogenen Palette;
(b) Ablegen der ersten Schicht oder der ersten Schichten der Palette mit Hilfe mehrerer zweiter Vorrichtungen (53) des Aufstapelns von Schichten;
(c) Entfernen der Palette durch einen automatischen Wagen (139), der durch das genannte Informations-System (185) geführt wird, beim Aufbau der Vorrichtung (53) zum Aufstapeln der Schichten in Erwartung der Verfügbarkeit einer anderen Art von Schichten in einer anderen Vorrichtung (53) zum Aufstapeln von Schichten, bevor diese auf der heterogenen Palette aufgestapelt werden;
(d) Zuführen der beim Aufbau befindlichen Palette zu der Vorrichtung (53) zum Aufstapeln von Schichten, die Schichten aufstellt, bevor sie auf der heterogenen Palette bei deren Aufbau aufgestapelt werden;
(e) Wiederholen der Schritte (c) und (d) bis zum kompletten Aufbau der heterogenen Palette;
(f) Entfernen der kompletten heterogenen Palette von der Vorrichtung (53) zum Aufstapeln von Schichten.

9. Verfahren nach Anspruch 8, **dadurch gekennzeichnet, daß** während des Verfahrensschrittes (c) die beim Aufbau befindliche Palette in Richtung auf eine dynamische Aufbewahrungs-Zone (193) entfernt wird und daß während des Verfahrensschrittes (d) die im Aufbau befindliche Palette in der dynamischen Aufbewahrungs-Zone (193) wiederaufgenommen wird, um sie einer Vorrichtung (53) zum Aufstapeln von Schichten zuzuführen.
